# EUROPEAN PATENT APPLICATION

(11) **EP 4 800 860 A1**
(43) Date of publication of application: **02.09.2026**
(21) Application number: 26156370.4
(22) Date of filing: 04.02.2026
(51) Int. Cl.: H02B 11/04, H01R 4/48, H01R 13/533, H01R 13/631, H01R 13/14, H02B 1/56

(54) **MAIN CIRCUIT PLUG-IN ASSEMBLY AND POWER DISTRIBUTION CABINET**

(30) Priority: 28.02.2025 CN 202520351193 U
(71) Applicant: SCHNEIDER ELECTRIC INDUSTRIES SAS, 92500 Rueil-Malmaison (FR)
(72) Inventor: YANG, Xiaotian, Shaanxi, 710076 (CN); ZHANG, Qinghong, Shaanxi, 710076 (CN)
(74) Representative: Openshaw & Co.

(57) **Abstract**

A main circuit plug-in assembly (100) includes: a cover (10) including first and second openings (11, 12); a chuck (20) extending through the cover (10), where two ends of the chuck (20) protrude outwardly from the first and second openings (11, 12) respectively; a support member (30) detachably coupled to the cover (10) and including a third opening (33), a limiting groove (310), and a heat dissipation hole (32). The third opening (33) is disposed on a side of the support member (30) adjacent to the second opening (12) and is communicated with the interior of the support member (30). The limiting groove (310) is disposed on a side of the support member (30) away from the second opening (12) and allows a terminal bar (211) to be inserted therein and electrically connected to the chuck (20). The heat dissipation hole (32) is disposed on the side of the support member (30) away from the second opening (12), allowing air inside the support member (30) to exchange heat with the outside environment through the heat dissipation hole (32).

## Description

### FIELD

Embodiments of the present disclosure generally relate to the field of electrical equipment, and in particular, to a main circuit plug-in assembly and a power distribution cabinet.

### BACKGROUND

Drawer-type power distribution cabinets are particularly prevalent. By arranging two or more withdrawable drawer assemblies on the same layer, modularization and standardization of power distribution units can be realized. The drawer assembly can include electrical components such as a circuit breaker, a contactor, a relay, an electric energy meter, a fuse, and a transformer. Each drawer serves as an independent functional unit, and can be conveniently installed, replaced or serviced without affecting the normal operation of other drawers. In some conventional drawer-type power distribution cabinets, the drawer assembly may be electrically connected to the vertical bar in the cabinet body through the main circuit plug-in assembly.

### SUMMARY

In a first aspect of the present disclosure, a main circuit plug-in assembly is provided. The main circuit plug-in assembly includes: a cover including a first opening and a second opening disposed on two opposite sides; a chuck extending through the cover, where two ends of the chuck protrudes outwardly from the first opening and the second opening respectively; and a support member detachably coupled to the cover and including a third opening, a limiting groove, and a heat dissipation hole, where the third opening is disposed on a side of the support member adjacent to the second opening, and is communicated with the interior of the support member, the limiting groove is disposed on a side of the support member away from the second opening, and allows a terminal bar to be inserted therein and electrically connected to the chuck, and the heat dissipation hole is disposed on the side of the support member away from the second opening, allowing air inside the support member to exchange heat with the outside environment through the heat dissipation hole.

In some embodiments, the support member further includes: a limiting part disposed on the side of the support member away from the second opening, and extending in a direction away from the second opening, where the limiting groove is disposed in the limiting part.

In some embodiments, the support member further includes: an insulating rib disposed on at least one side of the limiting part and coupled to the limiting part, where the limiting part and the insulating rib surround the heat dissipation hole.

In some embodiments, the support member further includes: an reinforcing part coupled to the limiting part on at least one side of the limiting part.

In some embodiments, the support member further includes a first through hole penetrating through two opposite sides of the limiting part, the first through hole corresponds to a second through hole on the terminal bar, and the main circuit plug-in assembly further includes: a connecting member adapted to penetrate through the first through hole and the second through hole and detachably coupled to the limiting part and the terminal bar.

In some embodiments, the cover includes a pair of engaging grooves provided at an edge of the second opening, the support member includes a pair of connecting parts disposed at an edge of the third opening, and the pair of connecting parts are detachably coupled to the pair of engaging grooves respectively.

In some embodiments, the cover includes a first mounting part disposed at an edge thereof, the support member includes a second mounting part disposed at an edge thereof, and the first mounting part corresponds to the second mounting part and is adapted to be detachably coupled to a drawer assembly.

In some embodiments, the support member further includes: a partition part disposed inside the support member, and adapted to divide the interior of the support member into multi-layered regions for placing the chuck.

In some embodiments, the partition part includes a step disposed at a surface thereof, so as to form a heat dissipation channel between the chuck and the surface of the partition part.

In a second aspect of the present disclosure, a power distribution cabinet is provided. The power distribution cabinet includes: a cabinet body; a plurality of vertical bars disposed in the cabinet body; a drawer assembly detachably coupled to the cabinet body and including a plurality of terminal bars; and a plurality of main circuit plug-in assemblies of the first aspect of the present disclosure coupled to the drawer assembly at a side of the drawer assembly facing towards the plurality of vertical bars, where the plurality of main circuit plug-in assemblies are electrically connected to the plurality of terminal bars respectively and are adapted to be electrically connected to the plurality of vertical bars respectively.

In embodiments of the present disclosure, the main circuit plug-in assembly includes the cover, the chuck, and the support member. The cover includes the first opening and the second opening disposed on two opposite sides. The chuck extends through the cover, and two ends of the chuck protrudes outwardly from the first opening and the second opening respectively. The support member is detachably coupled to the cover. The support member includes the third opening, the limiting groove, and the heat dissipation hole. The third opening is disposed on a side of the support member adjacent to the second opening, and is communicated with the interior of the support member. The limiting groove is disposed on a side of the support member away from the second opening, and allows the terminal bar to be inserted therein and electrically connected to the chuck. The heat dissipation hole is disposed on the side of the support member away from the second opening, allowing air inside the support member to exchange heat with the outside environment through the heat dissipation hole. With this arrangement, the chuck of the main circuit plug-in assembly can be electrically connected to terminal bar in the drawer assembly. During the power-on operation, heat generated by the chuck and at the contact position between the chuck and the terminal bar can be dissipated through the heat dissipation hole on the support member, so that the temperature of the chuck can be reduced, the energy loss is reduced, and the reliability of the electrical connection is improved.

It should be understood that the content described in this content section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, where:
FIG. 1 shows a perspective view of a main circuit plug-in assembly according to an embodiment of the present disclosure, where a first opening is shown;
FIG. 2 shows a perspective view of a main circuit plug-in assembly according to an embodiment of the present disclosure, where a heat dissipation hole is shown;
FIG. 3 shows an exploded view of a main circuit plug-in assembly according to an embodiment of the present disclosure, where a heat dissipation hole is shown;
FIG. 4 shows an exploded view of a main circuit plug-in assembly according to an embodiment of the present disclosure, where a first opening is shown;
FIG. 5 shows a cross-sectional view of a main circuit plug-in assembly according to an embodiment of the present disclosure;
FIG. 6 shows a perspective view of a main circuit plug-in assembly according to another embodiment of the present disclosure; and
FIG. 7 shows a perspective view of a drawer assembly according to an embodiment of the present disclosure.

### Description of reference numerals:

100 main circuit plug-in assembly;
10 cover; 11 first opening; 12 second opening; 13 engaging groove; 14 first mounting part;
20 chuck;
30 support member; 31 limiting part; 310 limiting groove; 311 first through hole; 32 heat dissipation hole; 33 third opening; 34 insulating rib; 35 reinforcing part; 36 connecting part; 37 second mounting part; 38 partition part; 381 step;
41 connecting member; 411 stopping part; 412 prong; 42 threaded member;
210 drawer assembly; 211 terminal bar; 212 second through hole.

### DETAILED DESCRIPTION

Embodiments of the present disclosure will be described in more detail below with reference to the accompanying drawings. While embodiments of the present disclosure are shown in the drawings, it should be understood that the present disclosure may be implemented in various forms and should not be limited by the embodiments set forth herein. Rather, these embodiments are provided to make this disclosure more thorough and complete, and to fully convey the scope of the present disclosure to those skilled in the art.

As used herein, the term "including" and variations thereof represent an open-ended inclusion, i.e., "including but not limited to". Unless specifically stated, the term "or" means "and/or". The term "based on" means "based at least in part on". The terms "an example embodiment" and "an embodiment" mean "at least one example embodiment". The term "another embodiment" means "at least one further embodiment". The terms "first", "second", and the like may refer to different or identical objects.

As described above, in some conventional drawer-type power distribution cabinets, the drawer assembly may be electrically connected to the vertical bar in the cabinet body through the main circuit plug-in assembly. During operation, due to the existence of electrical resistance at the chuck of the main circuit plug-in assembly and the contact position between the chuck and the terminal bar, the temperature inside the main circuit plug-in assembly rises, which intensifies the electric energy loss. In addition, the high temperature may lead to material deformation, oxidation, or other forms of damage, thereby reducing the stability of the electrical connection.

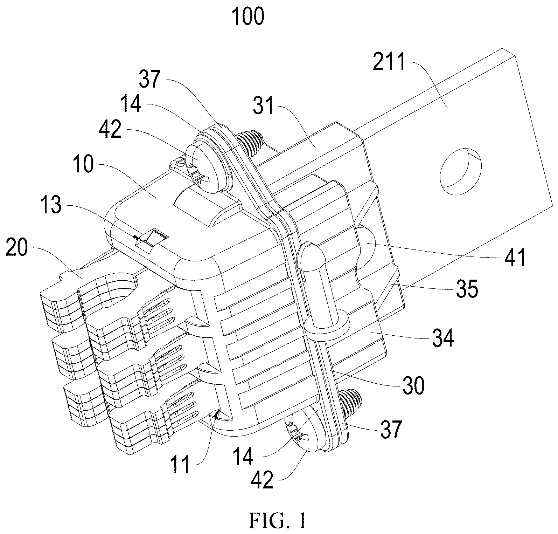

Embodiments of the present disclosure provide a main circuit plug-in assembly and a power distribution cabinet. In the main circuit plug-in assembly, a cover includes a first opening and a second opening disposed on two opposite sides. A chuck extends through the cover, and two ends of the chuck protrudes outwardly from the first opening and the second opening respectively. A support member is detachably coupled to the cover. The support member includes a third opening, a limiting groove, and a heat dissipation hole. The third opening is disposed on a side of the support member adjacent to the second opening, and is communicated with the interior of the support member. The limiting groove is disposed on a side of the support member away from the second opening, and allows the terminal bar to be inserted therein and electrically connected to the chuck. The heat dissipation hole is disposed on the side of the support member away from the second opening, allowing air inside the support member to exchange heat with the outside environment through the heat dissipation hole. With this arrangement, the chuck of the main circuit plug-in assembly can be electrically connected to terminal bar in the drawer assembly. During operation, heat generated by the chuck and at the contact position between the chuck and the terminal bar can be dissipated through the heat dissipation hole on the support member, so that the temperature of the chuck can be reduced, the energy loss is reduced, and the reliability of the electrical connection of the main circuit plug-in assembly is improved. The principles of the present disclosure will be described in detail below with reference to FIGS. 1 to 7.

As shown in FIGS. 1 to 4, a main circuit plug-in assembly 100 includes a cover 10, a chuck 20, and a support member 30. The cover 10 is detachably connected to the support member 30, and the chuck 20 may be fixed therebetween. The cover 10 and the support member 30 may further be mounted on the outer frame of the drawer assembly 210 to secure the entire main circuit plug-in assembly 100 to the drawer assembly 210. The chuck 20 serves as a connecting member for current transmission, an end of the chuck 20 is electrically connected to a terminal bar 211 inside the drawer assembly 210, and the other end of the chuck 20 is electrically connected to a vertical bar in the power distribution cabinet when the drawer assembly 210 is inserted into the power distribution cabinet. In this way, even with frequent plugging and unplugging operation, good contact between the terminal bar 211 in the drawer assembly 210 and the vertical bar in the power distribution cabinet can be maintained, thereby establishing a stable and reliable circuit path.

As shown in FIGS. 1 to 5, the cover 10 includes a first opening 11 and a second opening 12. The first opening 11 and the second opening 12 are disposed on two opposite sides of the cover 10, and the first opening 11 and the second opening 12 are communicated with the interior of the cover 10. The cover 10 is of a hollow structure, which allows the chuck 20 to extend through the entire cover 10. Two ends of the chuck 20 can protrude outwardly from the first opening 11 and the second opening 12 respectively, so as to be electrically connected to the vertical bar in the power distribution cabinet and the terminal bar 211 in the drawer assembly 210.

As an example, as shown in FIGS. 1 to 4, a plurality of chucks 20 may be provided. For example, three chucks 20 are arranged side by side. With this arrangement, the electrical conductivity of the main circuit plug-in assembly 100 can be increased through the configuration of the plurality of chucks 20, making the main circuit plug-in assembly 100 applicable to a power distribution cabinet with a relatively high rated operating current.

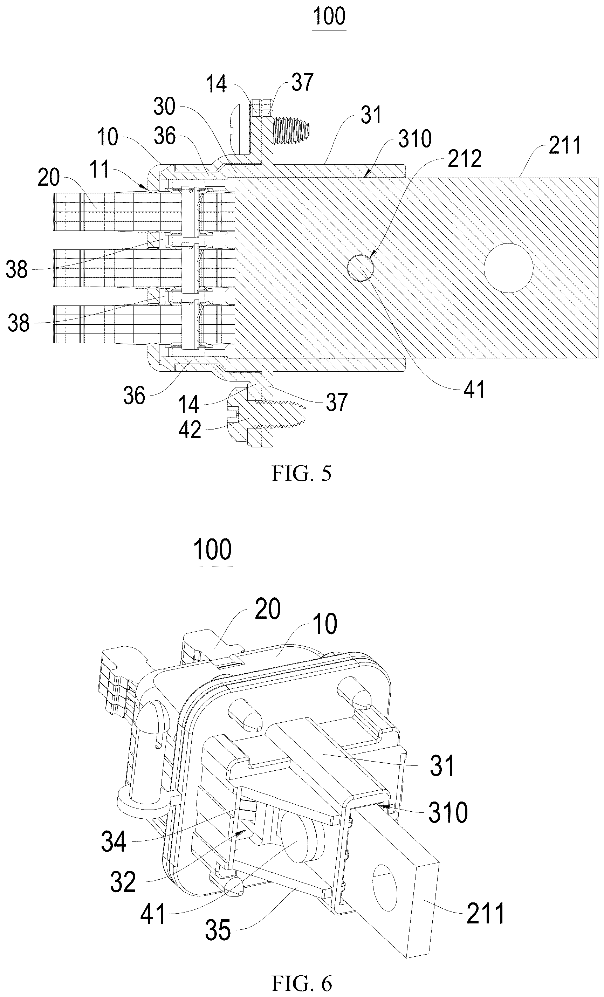

As another example, as shown in FIG. 6, the number of the chucks 20 may be one. The two ends of the single chuck 20 may be electrically connected to the vertical bar in the power distribution cabinet and the terminal bar 211 in the drawer assembly 210 respectively. With this arrangement, the single chuck 20 may be adapted to a power distribution cabinet with a relatively low rated operating current.

It should be understood that, in other embodiments, the number of the chucks 20 may be set as required, and the size of the chuck 20 may be adjusted as required, and the present disclosure is not intended to limit the specific number, the specification or model.

As shown in FIGS. 1 to 4, the support member 30 is detachably coupled to the cover 10. When the support member 30 and the cover 10 are fixed together, the chuck 20 may be fixed inside the support member 30 and the cover 10. The support member 30 includes a third opening 33, a limiting groove 310, and a heat dissipation hole 32. The third opening 33 is disposed on a side of the support member 30 adjacent to the second opening 12 and is communicated with the interior of the support member 30. An end of the chuck 20 protruding outwardly from the second opening 12 is inserted into the interior of the support member 30. The limiting groove 310 is disposed on the side of the support member 30 away from the second opening 12, and the limiting groove 310 is also communicated with the interior of the support member 30. The terminal bar 211 in the drawer assembly 210 may be inserted into the limiting groove 310 and electrically connected to the chuck 20. In addition, the limiting groove 310 may further limit the terminal bar 211 of the drawer assembly 210, so as to prevent relative displacement between the terminal bar 211 and the chuck 20, thereby ensuring the stability of the electrical connection.

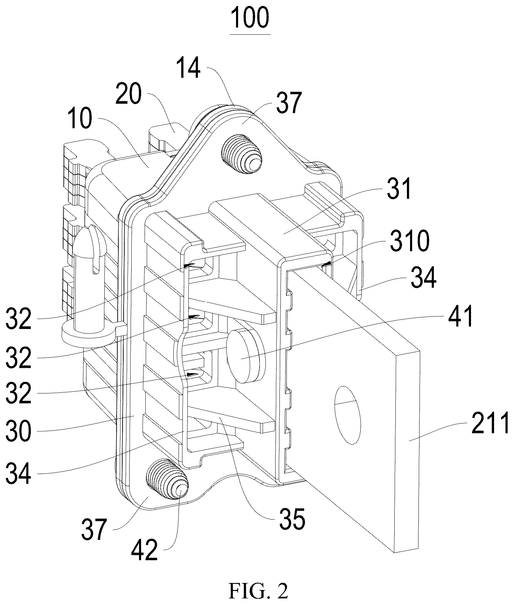

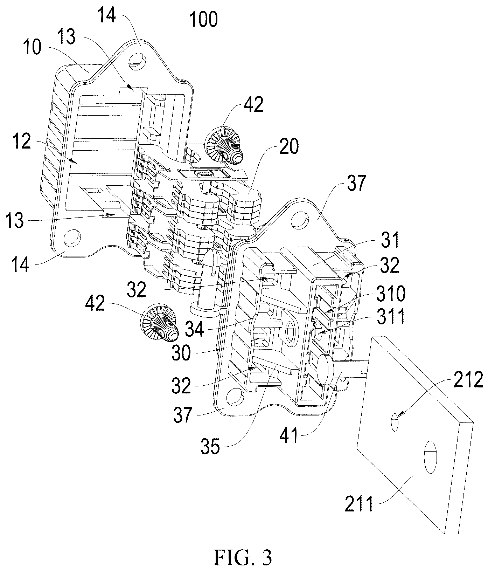

As shown in FIGS. 2 and 3, the heat dissipation hole 32 is disposed on the side of the support member 30 away from the second opening 12, and air inside the support member 30 may exchange heat with the outside environment through the heat dissipation hole 32. In this way, the heat generated at the chuck 20 may be dissipated from the interior of the support member 30, reducing the temperature rise issues due to current passing through the chuck 20.

With this arrangement, heat generated by the chuck 20 and at the contact position between the chuck 20 and the terminal bar 211 during the power-on operation can be dissipated through the heat dissipation hole 32 on the support member 30, so that the temperature of the chuck 20 can be reduced, thereby reducing the energy loss at the main circuit plug-in assembly 100 and improving the reliability of the electrical connection.

In some embodiments, as shown in FIGS. 1 to 4, the support member 30 further includes a limiting part 31. The limiting part 31 is disposed on the side of the support member 30 away from the second opening 12, and the limiting part 31 extends in a direction away from the second opening 12. The limiting groove 310 is disposed in the limiting part 31. As an example, the limiting part 31 may be a rectangular middle frame, and a rectangular limiting groove 310 is disposed in the rectangular middle frame. With this arrangement, the terminal bar 211 in the drawer assembly 210 can be inserted into the rectangular limiting groove 310. The limiting part 31 may surround the terminal bar 211, thereby supporting and limiting the terminal bar 211. The terminal bar 211 may be inserted into the support member 30 from the limiting groove 310 and electrically connected to the chuck 20 inside the support member 30.

In addition, the limiting part 31 further has insulating protection performance. The outer frame of the drawer assembly 210 may be a metal conductive structure. When the support member 30 is mounted on the outer frame of the drawer assembly 210, the limiting part 31 surrounds the outer side of the terminal bar 211. The limiting part 31 may form an insulating protective layer on the outer side of the terminal bar 211, thereby increasing the insulating performance between the terminal bar 211 and the outer frame of the drawer assembly 210, and improving the safety of the drawer assembly 210.

In some embodiments, the greater the extended length of the limiting part 31, the larger the area of the terminal bar 211 surrounded by the limiting part 31, and the stronger the insulating capacity provided by the limiting part 31. In other embodiments, the insulating capacity of the terminal bar 211 and the outer frame of the drawer assembly 210 may also be increased by adjusting the thickness and the material of the limiting part 31. It should be understood that the insulating capacity of the limiting part 31 is related to its extended length, thickness, and material, and the operator may select the appropriate dimensions and material as needed, and the present disclosure is not intended to limit the specific dimensions and materials.

In some embodiments, as shown in FIGS. 2 and 3, the support member 30 further includes an insulating rib 34. The insulating rib 34 is disposed on at least one side of the limiting part 31, and the insulating rib 34 is coupled to the limiting part 31. The limiting part 31 and the insulating rib 34 surround the heat dissipation hole 32. With this arrangement, the insulating rib 34 and the limiting part 31 can form a continuous annular insulating barrier on the outer side of the heat dissipation hole 32, and the safety distance between the chuck 20 and the outer frame of the drawer assembly 210 can be increased at the heat dissipation hole 32, thereby avoiding electrical discharge between the chuck 20 and the outer frame of the drawer assembly 210 at the heat dissipation hole 32.

In some embodiments, as shown in FIGS. 2 and 3, the support member 30 includes a pair of heat dissipation holes 32 and a pair of insulating ribs 34. The limiting part 31 is located between the pair of heat dissipation holes 32, and the limiting part 31 may provide insulating protection on a side of each heat dissipation hole 32. Each insulating rib 34 surrounds the remaining three sides of the corresponding heat dissipation hole 32, and may surround the corresponding heat dissipation hole 32 together with the limiting part 31, thereby forming a continuous insulating barrier on the outer side of the heat dissipation hole 32.

In some embodiments, as shown in FIGS. 2 and 3, each heat dissipation hole 32 may include a plurality of sub-heat dissipation holes 32, and the plurality of sub-heat dissipation holes 32 are disposed adjacently. The insulating rib 34 and the limiting part 31 may surround the plurality of sub-heat dissipation holes 32, thereby providing an insulating barrier on the outer side of the plurality of sub-heat dissipation holes 32.

In some embodiments, as shown in FIGS. 2 and 3, the support member 30 further includes a reinforcing part 35. The reinforcing part 35 is coupled to the limiting part 31 on at least one side of the limiting part 31. With this arrangement, the reinforcing part 35 can provide lateral support for the limiting part 31, which increases the lateral bending strength of the limiting part 31, thereby improving the overall structural strength of the support member 30.

In some embodiments, as shown in FIGS. 2 and 3, the support member 30 includes paired reinforcing parts 35, for example, four reinforcing parts 35. Each of two sides of the limiting part 31 is provided with two reinforcing parts 35. As an example, the reinforcing part 35 may be a triangular or trapezoidal structure. As described above, the limiting part 31 may form a cantilever structure on the support member 30, and the pair of reinforcing parts 35 may increase the bending resistance of the limiting part 31, so as to prevent the limiting part 31 from breaking from the root under an external force, thereby increasing the overall strength of the support member 30.

In some embodiments, as shown in FIGS. 2 and 3, the support member 30 further includes a first through hole 311 penetrating through two opposite sides of the limiting part 31. The terminal bar 211 in the drawer assembly 210 is provided with a second through hole 212. After the terminal bar 211 is inserted into the limiting groove 310 and electrically connected to the chuck 20, the first through-hole 311 corresponds to the second through hole 212 on the terminal bar 211. The main circuit plug-in assembly 100 further includes a connecting member 41. The connecting member 41 may penetrate through the first through hole 311 and the second through hole 212, and the connecting member 41 is detachably coupled to the limiting part 31 and the terminal bar 211. With this arrangement, after the terminal bar 211 is inserted into the limiting groove 310, the connecting member 41 can be inserted into the first through hole 311 and the second through hole 212, thereby fixing the terminal bar 211 and the main circuit plug-in assembly 100 together, and the connecting member 41 can maintain a stable connection between the terminal bar 211 and the chuck 20.

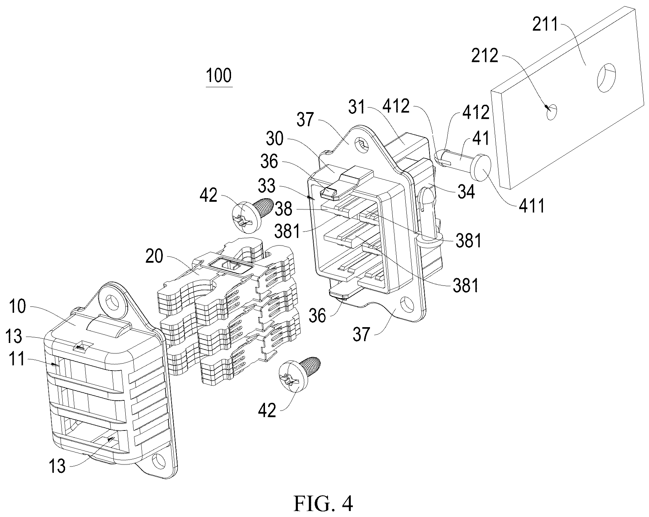

As an example, as shown in FIGS. 3 and 4, the connecting member 41 may be a pin. In this way, the pin may be inserted into the first through hole 311 and the second through hole 212, thereby fixing the terminal bar 211 and the main circuit plug-in assembly 100 together.

In some embodiments, an end of the pin includes a stopping part 411, the other end of the pin may include two prongs 412 spaced apart from each other, and the two prongs 412 have elasticity. When the two prongs 412 are close to each other, the pins may be allowed to be inserted into the first through hole 311 and the second through hole 212. After the pin is fully inserted into the first through hole 311 and the second through hole 212, the two prongs are spaced away from each other under elastic action, so that the pin can be fixed in the first through hole 311 and the second through hole 212. With this arrangement, the mounting and removal efficiency of the pin is improved.

As another example, the connecting member 41 may be a threaded member. In this way, the threaded member can be inserted into the first through hole 311 and the second through hole 212, and then the terminal bar 211 and the main circuit plug-in assembly 100 are fixed together by the cooperation of the threaded member and a nut.

In some embodiments, as shown in FIGS. 3 and 4, the cover 10 includes a pair of engaging grooves 13 provided at an edge of the second opening 12. The support member 30 includes a pair of connecting parts 36 disposed at an edge of the third opening 33, and the pair of connecting parts 36 are detachably coupled to the pair of engaging grooves 13 respectively. With this arrangement, the cover 10 can be aligned with the support member 30, and the pair of engaging grooves 13 correspond to the pair of connecting parts 36 respectively. The cover 10 and the support member 30 are pressed forcefully, so that the cover 10 and the support member 30 are close to each other, and the pair of connecting parts 36 can be inserted into the pair of engaging grooves 13 respectively, thereby realizing the connection between the cover 10 and the support member 30. When the cover 10 is disassembled from the support member 30, the pair of connecting parts 36 are pressed to deform slightly, so that the pair of connecting parts 36 can be withdrawn from the corresponding engaging grooves 13, thereby removing the cover 10 from the support member 30.

In some embodiments, as shown in FIGS. 2 and 3, the cover 10 includes a first mounting part 14 disposed at an edge thereof. The support member 30 includes a second mounting part 37 disposed at an edge thereof. The first mounting part 14 corresponds to the second mounting part 37 and is adapted to be detachably coupled to the drawer assembly 210. As an example, the number of the first mounting parts 14 and the number of the second mounting parts 37 may both be three, and the three first mounting parts 14 respectively correspond to the three second mounting parts 37. The first mounting part 14 and the second mounting part 37 may be provided with threaded holes, the three threaded members 42 are respectively inserted into the corresponding threaded holes, and the first mounting part 14 and the second mounting part 37 may be fixed together. In addition, the three threaded members 42 may be connected to the outer frame of the drawer assembly 210, thereby fixing the main circuit plug-in assembly 100 on the outer frame of the drawer assembly 210.

In some embodiments, as shown in FIG. 4, the support member 30 further includes a partition part 38. The partition part 38 is disposed inside the support member 30, and the partition part 38 may divide the interior of the support member 30 into multi-layered regions for placing the chuck 20. As an example, as shown in FIG. 4, two partition parts 38 are disposed inside the support member 30, the two partition parts 38 can divide the interior of the support member 30 into three layered regions, and a chuck 20 can be placed in each layered region, thereby achieving the limiting of three chucks 20.

In some embodiments, as shown in FIG. 4, the partition part 38 includes a step 381 disposed at a surface thereof. The step 381 may form a heat dissipation channel between the chuck 20 and the surface of the partition part 38. In this way, when an end of the chuck 20 is inserted into the support member 30, the chuck 20 is not in direct contact with the surface of the partition part 38. Instead, the heat dissipation channel is formed under the support member of the step 381. The heat dissipation channels facilitate the outward dissipation of heat from the chuck 20, thereby helping to reduce the temperature of the chuck 20.

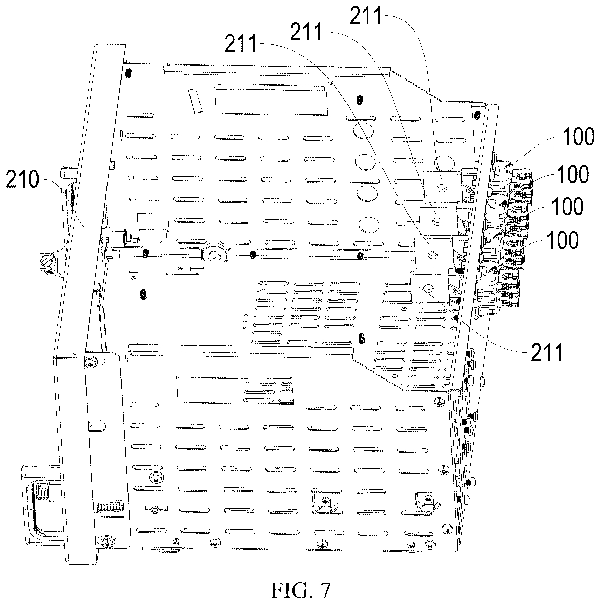

In a second aspect of the present disclosure, a power distribution cabinet is provided. As shown in FIG. 7, the power distribution cabinet includes a cabinet body, a plurality of vertical bars, a drawer assembly 210, and a plurality of main circuit plug-in assemblies 100 according to any of the above described. The plurality of vertical bars are disposed in the cabinet body. The cabinet body is provided with slide rails, and the drawer assembly 210 is detachably coupled to the slide rails on the cabinet body. When an operator applies an outward force to the drawer assembly 210, the drawer assembly 210 may be withdrawn from the cabinet body. When an inward force is applied to the drawer assembly 210, the drawer assembly 210 may be pushed into the cabinet body. The drawer assembly 210 includes a plurality of terminal bars 211. The plurality of main circuit plug-in assemblies 100 are disposed on a side of the drawer assembly 210 facing towards the plurality of vertical bars, and the plurality of main circuit plug-in assemblies 100 are coupled to the drawer assembly 210.

As an example, the number of vertical bars may be four, the number of the main circuit plug-in assemblies 100 may also be four, and the four vertical bars respectively correspond to the three phase lines and the neutral line of the three-phase circuit. The four main circuit plug-in assemblies 100 correspond to four vertical bars respectively.

The plurality of terminal bars 211 in the drawer assembly 210 are respectively inserted into the limiting grooves 310 of the plurality of main circuit plug-in assemblies 100 and electrically connected to the corresponding chucks 20. When the drawer assembly 210 is pushed into the cabinet body, the plurality of main circuit plug-in assemblies 100 may be electrically connected to the plurality of vertical bars respectively.

With this arrangement, in the power distribution cabinet, the chuck 20 of the main circuit plug-in assembly 100 may be electrically connected to the terminal bar 211 in the drawer assembly 210. During operation, heat generated by the chuck 20 and the position where the chuck 20 is in contact with the terminal bar 211 can be dissipated through the heat dissipation hole 32 on the support member 30, so that the temperature of the chuck 20 can be reduced, thereby reducing the energy loss at the main circuit plug-in assembly 100 and improving the reliability of the electrical connection of the main circuit plug-in assembly 100.

Various embodiments of the present disclosure have been described above, which are illustrative, not exhaustive, and are not limited to the embodiments disclosed. Many modifications and variations will be apparent to those of ordinary skill in the art without departing from the scope of the illustrated embodiments. The selection of the terms used herein is intended to explain the principles of the embodiments, practical applications, or technical improvements in the marketplace, or to enable others of ordinary skill in the art to understand the embodiments disclosed herein.

## Claims

1. A main circuit plug-in assembly (100), the main circuit plug-in assembly comprising:
a cover (10) comprising a first opening (11) and a second opening (12) disposed on two opposite sides;
a chuck (20) extending through the cover (10), wherein two ends of the chuck (20) protrude outwardly from the first opening (11) and the second opening (12) respectively; and
a support member (30) detachably coupled to the cover (10) and comprising a third opening (33), a limiting groove (310), and a heat dissipation hole (32), wherein the third opening (33) is disposed on a side of the support member (30) adjacent to the second opening (12) and is in communication with the interior of the support member (30), the limiting groove (310) is disposed on a side of the support member (30) away from the second opening (12) and allows a terminal bar (211) to be inserted therein and electrically connected to the chuck (20), and the heat dissipation hole (32) is disposed on the side of the support member (30) away from the second opening (12), allowing air inside the support member (30) to exchange heat with the outside environment through the heat dissipation hole (32).

2. The main circuit plug-in assembly (100) of claim 1, wherein the support member (30) comprises:
a limiting part (31) disposed on the side of the support member (30) away from the second opening (12) and extending in a direction away from the second opening (12), wherein the limiting groove (310) is disposed in the limiting part (31).

3. The main circuit plug-in assembly (100) of claim 2, wherein the support member (30) comprises:
an insulating rib (34) disposed on at least one side of the limiting part (31) and coupled to the limiting part (31), wherein the limiting part (31) and the insulating rib (34) surround the heat dissipation hole (32).

4. The main circuit plug-in assembly (100) of claim 2 or claim 3, wherein the support member (30) comprises:
a reinforcing part (35) coupled to the limiting part (31) on at least one side of the limiting part (31).

5. The main circuit plug-in assembly (100) of any of claims 2 to 4, wherein the support member (30) comprises a first through hole (311) penetrating through two opposite sides of the limiting part (31), the first through hole (311) corresponding to a second through hole (212) on the terminal bar (211), and the main circuit plug-in assembly (100) comprises:
a connecting member (41) adapted to penetrate through the first through hole (311) and the second through hole (212) and detachably coupled to the limiting part (31) and the terminal bar (211).

6. The main circuit plug-in assembly (100) of any of claims 1 to 5, wherein the cover (10) comprises a pair of engaging grooves (13) provided at an edge of the second opening (12), the support member (30) comprises a pair of connecting parts (36) disposed at an edge of the third opening (33), and the pair of connecting parts (36) are detachably coupled to the pair of engaging grooves (13) respectively.

7. The main circuit plug-in assembly (100) of any of claims 1 to 6, wherein the cover (10) comprises a first mounting part (14) disposed at an edge thereof, the support member (30) comprises a second mounting part (37) disposed at an edge thereof, and the first mounting part (14) corresponds to the second mounting part (37) and is adapted to be detachably coupled to a drawer assembly (210).

8. The main circuit plug-in assembly (100) of any of claims 1 to 7, wherein the support member (30) comprises:
a partition part (38) disposed inside the support member (30) and adapted to divide the interior of the support member (30) into multi-layered regions for placing the chuck (20).

9. The main circuit plug-in assembly (100) of claim 8, wherein the partition part (38) comprises a step (381) disposed at a surface thereof so as to form a heat dissipation channel between the chuck (20) and the surface of the partition part (38).

10. A power distribution cabinet, the power distribution cabinet comprising:
a cabinet body;
a plurality of vertical bars disposed in the cabinet body;
a drawer assembly (210) detachably coupled to the cabinet body and comprising a plurality of terminal bars (211); and
a plurality of main circuit plug-in assemblies (100) of any of claims 1 to 9 coupled to the drawer assembly (210) at a side of the drawer assembly (210) facing towards the plurality of vertical bars, wherein the plurality of main circuit plug-in assemblies (100) are electrically connected to the plurality of terminal bars (211) respectively and are adapted to be electrically connected to the plurality of vertical bars respectively.
